# EUROPÄISCHE PATENTSCHRIFT

(11) **EP 2 438 417 B1**
(45) Veröffentlichungstag und Bekanntmachung des Hinweises auf die Patenterteilung: **24.07.2013**
(21) Anmeldenummer: 10729694.9
(22) Anmeldetag: 02.06.2010
(51) Int. Cl.: G01L 9/14

(54) **SENSOR**
SENSOR
CAPTEUR

(30) Priorität: 03.06.2009 DE 102009023734
(43) Veröffentlichungstag der Anmeldung: 11.04.2012
(73) Patentinhaber: Marquardt Mechatronik GmbH, 78604 Rietheim-Weilheim (DE)
(72) Erfinder: WEISSER, Dietmar, 78532 Tuttlingen (DE); SCHULLCKE, Benjamin, 78315 Radolfzell (DE); MÜLLER, Heinrich, 78532 Tuttlingen (DE); SCHEITER, Markus, 78573 Wurmlingen (DE)
(74) Vertreter: Otten, Roth, Dobler & Partner
(86) Internationale Anmeldenummer: PCT/DE2010/000614
(87) Internationale Veröffentlichungsnummer: WO 2010/139308

(56) Entgegenhaltungen:
- DE-A1-102008 025 045
- DE-T2- 68 908 697
- US-A1- 2005 000 291

## Beschreibung

Die Erfindung betrifft eine Meßvorrichtung nach dem Oberbegriff des Patentanspruchs 1.

Bei der Meßvorrichtung kann es sich um einen Sensor, wie einen Drucksensor, einen Wegsensor o. dgl., handeln. Solche Meßvorrichtungen dienen vor allem zur Messung einer Meßgröße eines Fluids, beispielsweise zur Wasserstandsmessung in Waschmaschinen, Geschirrspülern, Nass- und/oder Trockensaugern oder in sonstigen wasserführenden Teilen von Hausgeräten. Insbesondere handelt es sich bei diesen Meßvorrichtungen um Drucksensoren für niedrige Drücke, nämlich beispielsweise kleiner als 3.500 Pa (Pascal).

Aus der DE 10 2008 025 045 A1 sind derartige Meßvorrichtungen mit einem Gehäuse und mit einer im und/oder am Gehäuse angeordneten Membran bekannt. Im Gehäuse befindet sich ein elastisches Element zur Rückstellung der Membran. Ein Signalgeber steht mit der Membran und/oder mit dem elastischen Element in Wirkverbindung. Mit dem Signalgeber wirkt ein Signalaufnehmer zur Erzeugung des Meßsignals zusammen. Bei diesen Sensoren wird eine gewisse Hysterese bei Veränderungen des Druckes und/oder der Temperatur des zu messenden Fluids beobachtet, welche wiederum zu einer Verfälschung des Meßsignals führen kann.

In der DE 689 08 697 T2 ist eine als ein elastisches Rückstellelement dienende Scheibenfeder beschrieben. Die Scheibenfeder besitzt zwischen deren Zentrum und deren Rand eine spiralartige Wellenringstruktur.

Der Erfindung liegt die Aufgabe zugrunde, die Meßvorrichtung derart auszugestalten, daß die Qualität des Meßsignals im Hinblick auf derartige Temperatur- und/oder Druckänderungen verbessert ist. Insbesondere soll für einen kleinen mechanischen Drucksensor im Niedrigdruckbereich als Meßvorrichtung ein Feder-Membran-System geschaffen werden, welches eine geringe Einbauhöhe benötigt und eine sehr geringe Hysterese über den Druck und/oder die Temperatur aufweist.

Diese Aufgabe wird bei einer gattungsgemäßen Meßvorrichtung durch die kennzeichnenden Merkmale des Anspruchs 1 gelöst.

Bei der erfindungsgemäßen Meßvorrichtung weist das elastische Element eine Struktur zur Versteifung auf. Mit anderen Worten werden in die Geometrie des elastischen Elements in gewissen Bereichen Strukturen zu dessen Versteifung eingebracht. Die Struktur zur Versteifung ist im Randbereich und/oder im Zentrum des elastischen Elements angeordnet. Mit anderen Worten sind bei der Blattfeder dann Strukturen zur Versteifung im Randbereich und/oder im Zentrum eingebracht. Dadurch ist ein platzsparendes sowie hysteresearmes Feder-Membran-System eines Drucksensors, der vor allem für kleine Drücke geeignet ist, geschaffen. Weitere Ausgestaltungen der Erfindung sind Gegenstand der Unteransprüche.

Zur Reduktion der Einbauhöhe der Meßvorrichtung bietet es sich an, daß das elastische Element in der Art einer scheibenförmigen Blattfeder ausgestaltet ist. Zweckmäßigerweise besitzt die Blattfeder eine kreisförmige Gestalt, die im wesentlichen zur Gestalt der Membran korrespondiert. Eine besonders hohe Rückstellkraft läßt sich beim elastischen Element dadurch erzielen, indem die Blattfeder ein vom Zentrum zum Randbereich der Blattfeder spiralförmig verlaufendes Federelement aufweist. Dadurch ist eine kompakte Ausgestaltung mit großer Federkraft gewährleistet.

In einfacher Art und Weise kann die Struktur zur Versteifung als eine Sicke ausgestaltet sein. Die Sicke kann wiederum der einfachen Herstellbarkeit halber einen in etwa U-förmigen Querschnitt besitzen. In kostengünstiger Weise läßt sich das elastische Element als ein Stanzteil aus Metall herstellen, wobei die Struktur in das elastische Element eingeprägt werden kann.

In einer einfachen und kostengünstigen Ausgestaltung besteht der Signalgeber aus einem Magnet. Der Signalaufnehmer besteht aus einem Positionssensor, der das vom Magneten erzeugte Magnetfeld detektiert. Bei dem Positionssensor kann es sich um einen Halisensor handeln. Es bietet sich an, den Signalgeber am elastischen Element, und zwar insbesondere in dessen Zentrum, in der Struktur anzuordnen. In diesem Fall dient die Struktur gleichzeitig als Aufnahme für den Signalgeber. Um eine Verschiebung zwischen dem Magnet und der Feder zu verhindern, ist zweckmäßigerweise der Signalgeber mit dem elastischen Element verklebt.

Um die empfindlichen Teile der Meßvorrichtung vor schädlichen Einflüssen weitgehend zu schützen, kann die Membran und das elastische Element sowie der Signalgeber und der Signalaufnehmer im Inneren des Gehäuses angeordnet sein. Das Gehäuse weist dann einen Anschlußstutzen zur Zuführung des zu messenden Fluids zur Membran auf.

Die mit der Erfindung erzielten Vorteile bestehen insbesondere darin, daß das Feder-Membran-System aufgrund der Versteifungen eine geringe Druckhysterese aufweist. Wegen der von der Temperatur abhängigen Reibung zwischen der Membran, die beispielsweise aus Silikon besteht, und dem Metall der Feder, schüsselt eine herkömmliche, unverstärkte Feder im Randbereich. Das erfindungsgemäße Feder-Membran-System hingegen weist eine geringe Temperaturhysterese auf. Desweiteren ist die Feder im Randbereich mechanisch steif und somit fertigungstechnisch bei der Herstellung des Sensors besser handhabbar. Außerdem wirkt der verstärkte Randbereich einer Verbiegung des Randbereichs der Feder, beispielsweise wenn der Sensor hinunterfällt, entgegen, womit der ansonsten in diesem Falle auftretenden Verfälschung des Verhaltens des Sensors entgegengewirkt wird. Schließlich ist auch die Bauhöhe des erfindungsgemäßen Feder-Membran-Systems äußerst gering, womit sich der Sensor in besonderem Maße für beengte Einbauräume eignet.

Ausführungsbeispiele der Erfindung mit verschiedenen Weiterbildungen und Ausgestaltungen sind in den Zeichnungen dargestellt und werden im folgenden näher beschrieben. Es zeigen
Fig. 1 einen Drucksensor in perspektivischer Ansicht,
Fig. 2 einen Schnitt durch den Drucksensor entlang der Linie 2-2 in Fig. 1,
Fig. 3 das Feder-Membran-System aus Fig. 2 in vergrößerter Darstellung,
Fig. 4 das Feder-Membran-System aus Fig. 3 in perspektivischer Darstellung,
Fig. 5 einen Schnitt wie in Fig. 2 für ein weiteres Ausführungsbeispiel,
Fig. 6 das Feder-Membran-System gemäß dem weiteren Ausführungsbeispiel in einer Darstellung wie in Fig. 3 und
Fig. 7 das Feder-Membran-System gemäß dem weiteren Ausführungsspiel in einer Darstellung wie in Fig. 4.

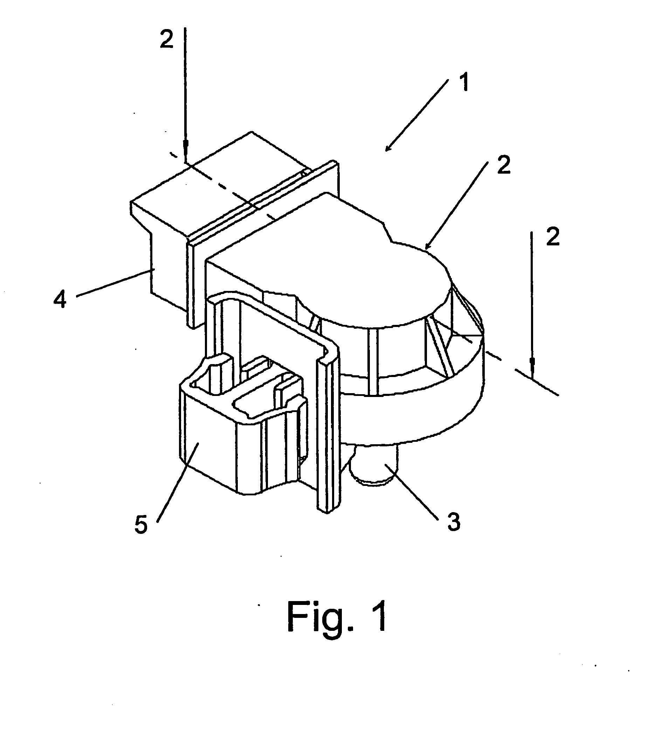

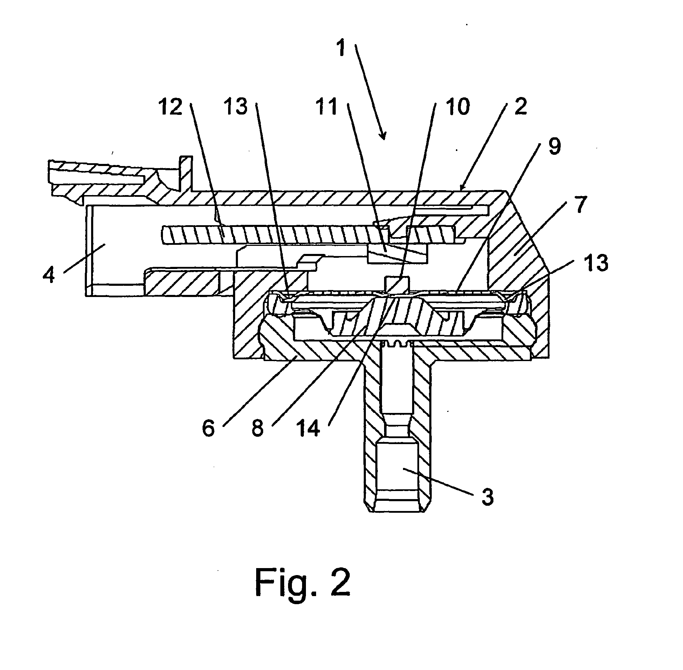

In Fig. 1 ist ein Drucksensor 1 zu sehen, der als Meßvorrichtung zur Messung einer Meßgröße eines Fluids, und zwar vorliegend des Drucks einer Flüssigkeit in einem Hausgerät, dient. Der Drucksensor 1 besitzt ein Gehäuse 2, an dem ein Anschlußstutzen 3 für die Zuführung der zu messenden Flüssigkeit angeordnet ist, sowie einen Steckanschluß 4 zum Anschluß der elektrischen Zuleitungen. Mittels einer am Gehäuse 2 befindlichen Verrastung 5 ist der Drucksensor 1 im Hausgerät montierbar. Das Gehäuse 2 schließlich umfaßt gemäß Fig. 2 einen Sockel 6 sowie einen Deckel 7.

Wie weiter der Fig. 2 zu entnehmen ist, ist im und/oder am Gehäuse 2 eine Membran 8 angeordnet, auf die die Flüssigkeit über den Anschlußstutzen 3 einwirkt. Entsprechend dem in der Flüssigkeit herrschenden Druck wird die Membran 8 durchgebogen. Auf die Membran 8 wirkt ein im Gehäuse 2 befindliches elastisches Element 9 als Feder zur Rückstellung der Membran 8 ein. Mit der Membran 8 und/oder dem elastischen Element 9 steht ein Signalgeber 10 in Wirkverbindung, womit der Signalgeber 10 entsprechend der Durchbiegung der Membran 8 verstellt wird. Mit dem Signalgeber 10 wirkt wiederum ein Signalaufnehmer 11 zusammen, der ein zur Verstellung des Signalgebers 10 korrespondierendes Signal erzeugt. Der Signalgeber 10 sowie der Signalaufnehmer 11 sind im Inneren des Gehäuses 2 angeordnet.

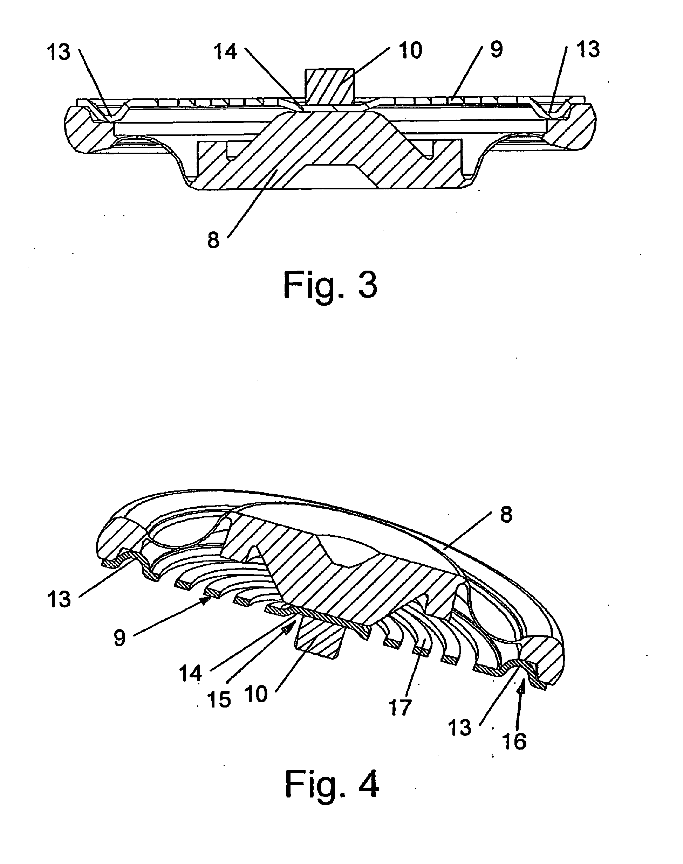

Der Signalgeber 10 besteht aus einem Magnet, und zwar aus einem Dauermagneten. Der Magnet 10 ist am elastischen Element 9 befestigt, und zwar mit dem elastischen Element 9 in dessen Zentrum 15 (siehe Fig. 4) verklebt. Der Signalaufnehmer 11 besteht aus einem Positionssensor, der an der der Membran 8 gegenüberliegenden Seite des Signalgebers 10 im Gehäuse 2 auf einer Leiterplatte 12 angeordnet ist. Zur Zusammenwirkung mit dem Magneten 10 bietet sich insbesondere ein Hallsensor als Positionssensor 11 an, der das vom Magneten 10 entsprechend dessen Verstellung erzeugte Magnetfeld detektiert. Vorliegend ist der Positionssensor 11 als integrierter Schaltkreis ausgestaltet, der die AuswerteElektronik enthält, so daß das zur Verstellung des Signalgebers 10 korrespondierende Signal entsprechend umgewandelt am Steckanschluß 4 als Meßsignal für den in der Flüssigkeit herrschenden Druck zur Verfügung steht.

Die kreisförmige Membran 8 besteht aus einem Elastomer, beispielsweise aus Silikon. Die Feder 9 besteht aus Metall, beispielsweise aus einem Federstahl. Die ebenfalls kreisförmige Feder 9 ist in der Art einer scheibenförmigen Blattfeder ausgestaltet, wie anhand der Fig. 4 zu erkennen ist, und weist ein vom Zentrum 15 zum Randbereich 16 der Blattfeder 9 spiralförmig verlaufendes Federelement 17 auf. Wie man weiter in Fig. 3 oder Fig. 4 sieht, ist eine Struktur 13 zur Versteifung im Randbereich 16 des elastischen Elements 9 angeordnet. Eine weitere Struktur 14 zur Versteifung ist im Zentrum 15 des elastischen Elements 9 befindlich. Die Strukturen 13, 14 sind als eine Sicke, die einen in etwa U-förmigen Querschnitt besitzt, ausgestaltet und dienen zur Versteifung des elastischen Elements 9. Die Versteifung des elastischen Elements 9 bewirkt wiederum die Verringerung der Hysterese für die Feder 9 im Hinblick auf Änderungen der Temperatur und/oder des Drucks.

Das elastische Element 9 kann als Stanzteil hergestellt werden. Die Strukturen 13, 14 sind in der Art von tiefgezogenen Prägungen in das elastische Element 9 eingebracht Außerdem dient die im Zentrum 15 der Blattfeder 9 befindliche Struktur 14 als Aufnahme für den am elastischen Element 9 angebrachten Magneten 10. Zur Fixierung ist der Magnet 10 mit dem elastischen Element 9 in der Struktur 14 verklebt.

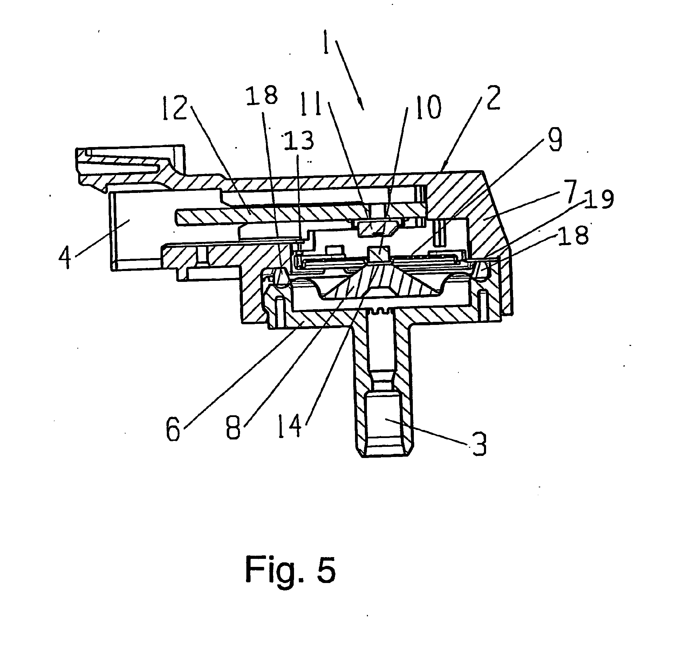

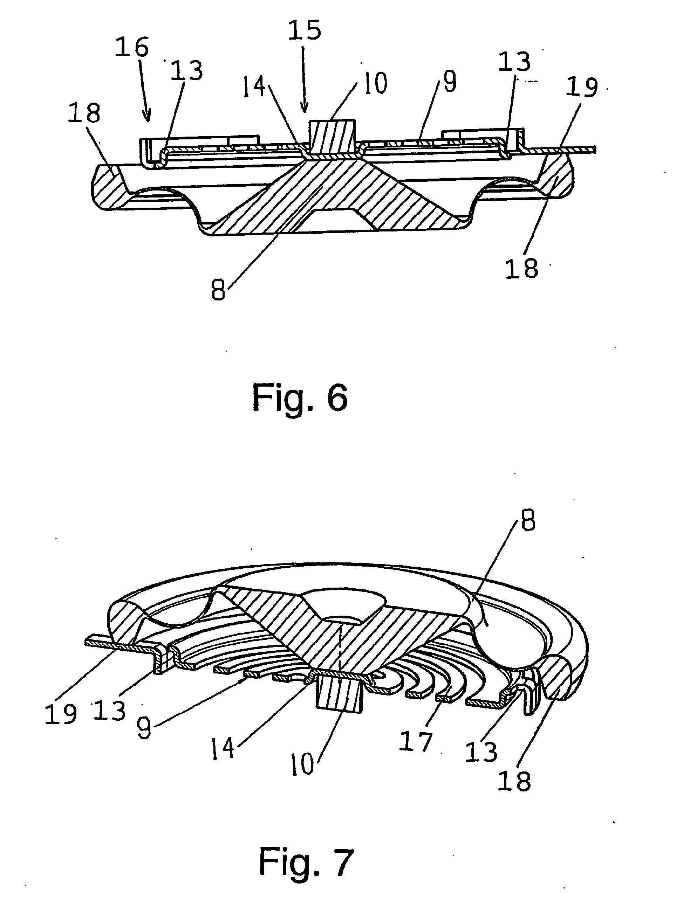

In Fig. 5 ist ein Drucksensor 1 gemäß einem weiteren Ausführungsbeispiel zu sehen. Bei diesem Drucksensor 1 besitzt die Blattfeder 9 einen kleineren Durchmesser als die Membran 8. Hier liegt die Blattfeder 9 also im wesentlichen innerhalb der Membran 8, wobei der am Rand der Membran 8 befindliche Wulst 18 über die Blattfeder 9 in Richtung des Durchmessers übersteht, wie anhand der Fig. 6 zu erkennen ist. Die Blattfeder 9 weist entsprechend der Fig. 6 wiederum im Randbereich 16 eine sickenartige Struktur 13 sowie im Zentrum 15 eine weitere sickenartige Struktur 14 auf. Desweiteren schließt sich, wie in Fig. 7 zu sehen ist, an einer Stelle des Randbereichs 16 der Blattfeder 9 eine verlängernde Fahne 19 an. An dieser Fahne 19 liegt eine Stelle des Wulstes 18 an. Wie anhand der Fig. 5 näher zu sehen ist, dient die Fahne 19 zur Befestigung der Blattfeder 9 zwischen dem Sockel 6 und dem Deckel 7 des Gehäuses 2. Außerdem läßt sich die Blattfeder 9 bei der Montage im Gehäuse 2 mittels der Fahne 19 in einfacher Art und Weise handhaben.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann eine solche Meßvorrichtung auch als ein sonstiger Sensor, wie Füllstandsensor, Wegsensor o. dgl., eingesetzt werden und zwar nicht nur für Hausgeräte sondern auch in sonstigen Anwendungen, beispielsweise in der Labor- sowie in der chemischen Verfahrenstechnik.

**Bezugszeichen-Liste:**

| | |
|---|---|
| 1: | Drucksensor |
| 2: | Gehäuse |
| 3: | Anschlußstutzen |
| 4: | Steckanschluß |
| 5: | Verrrastung |
| 6: | Sockel (von Gehäuse) |
| 7: | Deckel (von Gehäuse) |
| 8: | Membran |
| 9: | elastisches Element / Feder / Blattfeder |
| 10: | Signalgeber / Magnet |
| 11: | Signalaufnehmer / Positionssensor |
| 12: | Leiterplatte |
| 13,14: | Struktur (von Feder) |
| 15: | Zentrum (von elastischem Element) |
| 16: | Randbereich (von elastischem Element) |
| 17: | spiralförmiges Federelement |
| 18: | Wulst (der Membran) |
| 19: | Fahne (an Feder) |

## Patentansprüche

1. Meßvorrichtung zur Messung einer Meßgröße eines Fluids, insbesondere Sensor, wie Drucksensor (1), Wegsensor o. dgl., mit einem Gehäuse (2), mit einer im und/oder am Gehäuse (2) angeordneten Membran (8), mit einem elastischen Element (9) zur Rückstellung der Membran (8), mit einem mit der Membran (8) und/oder dem elastischen Element (9) in Wirkverbindung stehenden Signalgeber (10), und mit einem mit dem Signalgeber (10) zusammenwirkenden Signalaufnehmer (11), **dadurch gekennzeichnet, daß** das elastische Element (9) eine Struktur (13, 14) zur Versteifung aufweist, wobei die Struktur (13, 14) zur Versteifung im Randbereich (16) und/oder im Zentrum (15) des elastischen Elements (9) angeordnet ist.

2. Meßvorrichtung nach Anspruch 1, **dadurch gekennzeichnet, daß** das elastische Element (9) in der Art einer scheibenförmigen Blattfeder ausgestaltet ist, daß vorzugsweise die Blattfeder (9) eine kreisförmige Gestalt besitzt, und daß weiter vorzugsweise die Blattfeder (9) ein vom Zentrum (15) zum Randbereich (16) der Blattfeder (9) spiralförmig verlaufendes Federelement (17) aufweist.

3. Meßvorrichtung nach Anspruch 1 oder 2, **dadurch gekennzeichnet, daß** die Struktur (13, 14) zur Versteifung als eine Sicke, die insbesondere einen in etwa U-förmigen Querschnitt besitzt, ausgestaltet ist.

4. Meßvorrichtung nach Anspruch 1, 2 oder 3, **dadurch gekennzeichnet, daß** das elastische Element (9) als ein Stanzteil aus Metall hergestellt ist, in das insbesondere die Struktur (13, 14) eingeprägt ist.

5. Meßvorrichtung nach einem der Ansprüche 1 bis 4, **dadurch gekennzeichnet, daß** der Signalgeber (10) aus einem Magnet besteht, und daß vorzugsweise der Signalaufnehmer (11) aus einem das vom Magneten erzeugte Magnetfeld detektierenden Positionssensor, insbesondere aus einem Hallsonsor, besteht.

6. Meßvorrichtung nach einem der Ansprüche 1 bis 5, **dadurch gekennzeichnet, daß** der Signalgeber (10) am elastischen Element (9), insbesondere in dessen Zentrum (15), in der Struktur (14) angeordnet ist, und daß vorzugsweise der Signalgeber (10) mit dem elastischen Element (9) verklebt ist.

7. Meßvorrichtung nach einem der Ansprüche 1 bis 6, **dadurch gekennzeichnet, daß** die Membran (8) und das elastische Element (9) sowie der Signalgeber (10) und der Signalaufnehmer (11) im Inneren des Gehäuses (2) angeordnet sind, und daß vorzugsweise das Gehäuse (2) einen Anschlußstutzen (3) zur Zuführung des Fluids zur Membran (8) aufweist.

## Claims

1. A measuring device for measuring a measured variable of a fluid, in particular a sensor, such as a pressure sensor (1), range sensor, or the like, having a housing (2) with a membrane (8) being arranged in and/or on the housing (2), having an elastic element (9) for resetting the membrane (8), having a transducer (10) being in operative connection with the membrane (8), and/or with the elastic element (9), and having a signal sensor (11) interacting with the transducer (10), **characterized in that** the elastic element (9) has a structure (13, 14) for reinforcement, wherein the structure (13, 14) for reinforcement is arranged in the edge region (16), and/or in the center (15) of the elastic element (9).

2. The measuring device according to claim 1, **characterized in that** the elastic element (9) is embodied in the manner of a disk-shaped flat spring, that the flat spring (9) preferably has a circular shape, and furthermore preferably that the flat spring (9) has a spring element (17) extending spirally from the center (15) toward the edge region (16) of the flat spring (9).

3. The measuring device according to claims 1 or 2, **characterized in that** the structure (13, 14) for reinforcement has a crimp, which in particular is embodied having an approximately U-shaped cross section.

4. The measuring device according to claims 1, 2, or 3, **characterized in that** the elastic element (9) is made as a blanked part from metal, into which in particular the structure (13, 14) is embossed.

5. The measuring device according to one of the claims 1 to 4, **characterized in that** the transducer (10) consists of a magnet, and that preferably the signal sensor (11) consists of a position sensor, in particular a hall sensor, detecting the magnetic field generated by the magnet.

6. The measuring device according to one of the claims 1 to 5, **characterized in that** the transducer (10) is arranged on the elastic element (9), in particular in the center (15) thereof, in the structure (14), and that preferably the transducer (10) is glued to the elastic element (9).

7. The measuring device according to one of the claims 1 to 6, **characterized in that** the membrane (8) and the elastic element (9), as well as the transducer (10) and the signal sensor (11) are arranged in the interior of the housing (2), and that preferably the housing (2) has a connecting piece (3) for feeding the fluid to the membrane (8).

## Revendications

1. Dispositif de mesure pour mesurer une grandeur de mesure d'un fluide, en particulier capteur, tel que capteur de pression (1), capteur de déplacement ou tout élément similaire, comportant un boîtier (2), comportant une membrane (8) disposée dans et/ou sur le boîtier (2), comportant un élément élastique (9) pour ramener la membrane (8) en position initiale, comportant un émetteur de signaux (10) en liaison active avec la membrane (8) et/ou l'élément (9) élastique, et comportant un récepteur de signaux (11) coopérant avec l'émetteur de signaux (10), **caractérisé en ce que** l'élément élastique (9) comporte une structure (13, 14) destinée à renforcer, ladite structure (13, 14) destinée à renforcer étant disposée dans la zone de bordure (16) et/ou au centre (15) de l'élément élastique (9).

2. Dispositif de mesure selon la revendication 1, **caractérisé en ce que** l'élément élastique (9) est configuré sous la forme d'un ressort à lame en forme de plaquette, **en ce que** de préférence le ressort à lame (9) a une forme circulaire, et **en ce que**, en outre, de préférence le ressort à lame (9) comporte un élément de ressort (17) s'étendant en forme de spirale depuis le centre (15) vers la zone de bordure (16) du ressort à lame (9).

3. Dispositif de mesure selon la revendication 1 ou 2, **caractérisé en ce que** la structure (13, 14) destinée à renforcer est réalisée sous la forme d'une nervure possédant de préférence une section transversale en forme de U.

4. Dispositif de mesure selon la revendication 1, 2 ou 3, **caractérisé en ce que** l'élément élastique (9) est réalisé sous la forme d'une pièce découpée en métal, dans laquelle est marquée en particulier la structure (13, 14).

5. Dispositif de mesure selon l'une quelconque des revendications 1 à 4, **caractérisé en ce que** l'émetteur de signaux (10) est formé par un aimant, et **en ce que** de préférence le récepteur de signaux (11) est formé par un capteur de position détectant le champ magnétique généré par l'aimant, en particulier un capteur à effet Hall.

6. Dispositif de mesure selon l'une quelconque des revendications 1 à 5, **caractérisé en ce que** l'émetteur de signaux (10) est disposé sur l'élément élastique (9), en particulier au centre (15) de celui-ci, dans la structure (14), et **en ce que** de préférence l'émetteur de signaux (10) est assemblé par collage à l'élément élastique (9).

7. Dispositif de mesure selon l'une quelconque des revendications 1 à 6, **caractérisé en ce que** la membrane (8) et l'élément élastique (9), ainsi que l'émetteur de signaux (10) et le récepteur de signaux (11) sont disposés à l'intérieur du boîtier (2), et **en ce que** de préférence le boîtier (2) comporte une tubulure de raccordement (3) pour l'acheminement du fluide vers la membrane (8).
